# EUROPEAN PATENT APPLICATION

(11) **EP 4 195 358 A1**
(43) Date of publication of application: **14.06.2023**
(21) Application number: 22382641.3
(22) Date of filing: 05.07.2022
(51) Int. Cl.: H01M 10/613, H01M 10/625, H01M 10/653, H01M 50/213, H01M 50/224, H01M 50/249, H01M 50/291, H01M 50/293, H01M 50/588, H01M 50/593

(54) **CASING FOR ELECTRIC BATTERY**

(30) Priority: 10.12.2021 ES 202132430 U
(71) Applicant: Stark Future, S.L., 08870 Sitges (Barcelona) (ES)
(72) Inventor: WASS, ANTON, SITGES (BARCELONA) (ES); SOUCY, PAUL, SITGES (BARCELONA) (ES)
(74) Representative: Espiell Gomez, Ignacio

(57) **Abstract**

Casing for electric battery that, applicable to an electric battery (2) to house inside a plurality of identical electrochemical cells (3) and comprising a metal container-shaped box (10), formed by a lower base (101) and a perimetric wall (102), where the cells (3) are incorporated. The lower base (101) of the said box (10) internally presents a plurality of identical slots (4), that are distributed on the full extent of its surface and that have a number, shape and size adapted to receive a lower portion of each of the cells (3), so that each of the cells (3) of the battery remains secured in one of the slots (4) and separated from each other with a regular gap between them.

## Description

### OBJECT OF THE INVENTION

The invention, as stated in the title of this specification, refers to a casing for electric battery, contributing, to the function to which it is designed, with advantages and characteristics that are disclosed in detail thereafter.

The object of this invention falls on a casing for electric battery , in particular an electric battery, for example for motorcycles or similar electric vehicles, of those formed by a metal box that houses a plurality of electrochemical cells that, conveniently connected, convert the chemical elements that they store into electric current , which is essentially distinguished in that the casing itself keeps the said cells perfectly placed and secured with a regular gap between them thanks to the existence of slots provided within the casing where the cells are fitted by an end, with which the evacuation of the heat they generate is improved.

### FIELD OF APPLICATION OF THE INVENTION

The field of application of this invention is within the sector of the industry engaged in manufacturing electric batteries, in particular focusing in the field of the cell electric batteries.

### BACKGROUND OF THE INVENTION

In the market, cell electric batteries are known of the type involved herein, that means, formed by a casing that is internally housing a plurality of electrochemical cells connected to produce electric current, the number of cells of which is irrelevant. For example, for the case of batteries designed to electric motorcycles, the number of cells can be around 200.

This type of batteries, in order that their performance is optimal, must correctly dissipate the heat generated by the cells. Currently, the dissipation of the heat generated by the cells is carried out by radial conduction because on the upper and lower faces of the cells, connections exist that hinder cooling by the axial axis.

In addition, the batteries must have all the cells correctly placed in order that, after, the connection arcs can be done, for example by means of a computerized robot. Currently, the correct placement of the cells is carried out by means of an element that fixes the cells to each other by the cells central area, leaving their ends free (upper and lower faces) for their connection.

The objective of this invention is, therefore, to provide a casing specially designed to improve the heat transfer of the cell outside as well as a means to facilitate the correct securing and placing of the cells (for) further connection.

On the other hand, and as reference to the current state-of-the-art, at least the applicant is not aware of the existence of any other casing for electric battery presenting technical and structural characteristics same or similar to those of that herein claimed.

### EXPLANATION OF THE INVENTION

The casing for electric battery that the invention proposes is configurated as the suitable solution to the above-mentioned objective, the characterizing details making it possible and that distinguish it conveniently appearing in the final claims attached to this description.

Concretely, what the invention proposes, as it was said before, is a casing for electric battery, in particular an electric battery, for example for motorcycles or similar electric vehicles, of those formed by a metal box that houses a plurality of identical electrochemical cells, which is essentially distinguished in that the own casing keeps the said cells perfectly placed and secured with a regular gap between them thanks to the existence of slots provided within it where the cells fits by an end, with which the evacuation generated by them is improved.

More specifically, the casing object of the invention essentially comprises, a container-shaped box, formed by a lower base and a perimetric wall, within which the electrochemical cells are incorporated, that are preferably cylindric, of the batteries, with the particularity that the said lower base presents a series of slots, machined by means of milling, on its internal surface, that encompass the full extent of the said surface and have a shape, size and gap adapted to receive a lower portion of each of the cell bodies, so that the said cells remain secured and separated from each other with a small regular tolerance.

As it has been said, preferably, the cells are cylindric and therefore, in the preferred embodiment, the slots of the internal surface of the base of the container-shaped box are circular and with a diameter in line with the diameter of the cells.

In addition, in a preferred embodiment, the cells fit in each of the said slots by means of the use of centering parts, which, formed by a sort of bowl of plastic material, "holed" (*orificada*) on the lower part and slotted walls that endow it with a certain flexibility, are interposed at the lower part of the cells between them and the housing that each slot defines, allowing to achieve an improved adjustment of each cell in the related slot.

Anyway, preferably, between the lower base of the cells and the housing defined by the slots of the internal surface of the base of the box of the casing, it is foreseen to incorporate a glue to assure a best fixation of the cells, which will have a composition such that it will convert it into an electric high voltage insulator with low resistance to the heat dissipation, which allows the heat conduction between the cells and the casing to favor the evacuation of the heat generated by the cells towards the base of the casing.

Optionally, the cells, after being inserted in the housings of the base, preferably with the centering parts and fixed with the glue, are secured on the top with a securing part or lid provided in the casing to be fitted on the perimetric wall of the described container-shaped box and that, in turn, also serves to centering the cells and to insulating them, for which it presents "holed" (*orificados*) housings, preferably circular as well as the cells, that surround the upper base of each cell and that only leave their contacts ,necessary for the electric connection uncovered.

This upper fixing part, that is fixed perimetrically to the box of the casing, serves for centering the cells by their upper part or opposite to that to which it remains inserted in the slots of the box base, so that all the cells remain perfectly parallel to each other with the same gap, as well as to close the structure that supports the cells and to insulate the positive pole from the negative pole and only leaving apparent or accessible a part for its connection.

For this, preferably, each circular housing of the upper fixing part presents a central hole coinciding with the lug of the cells upper base, that constitutes their positive pole or anode, and a lateral hole, provided on the circular surface existing between the said central hole and the perimetric wall of the slot, that leaves apparent at least a portion of the perimetric edge of each cell and that constitutes the negative pole or cathode.

Preferably, the upper securing part of the casing likewise presents cones that emerge around the said circular housings and that act as guide fingers to assist to centering the set of all the cells at their correct position. As there is a great number of cells (approximately 200), their individual centering is very difficult, thus, preferably, the said centering element is required to facilitate centering all of them as a whole.

The electronic plate is placed on the part and a robot proceeds to electrically joining the positive and negative poles of each cell through the holes provided in the part with the electronic plate.

### DESCRIPTION OF THE DRAWINGS

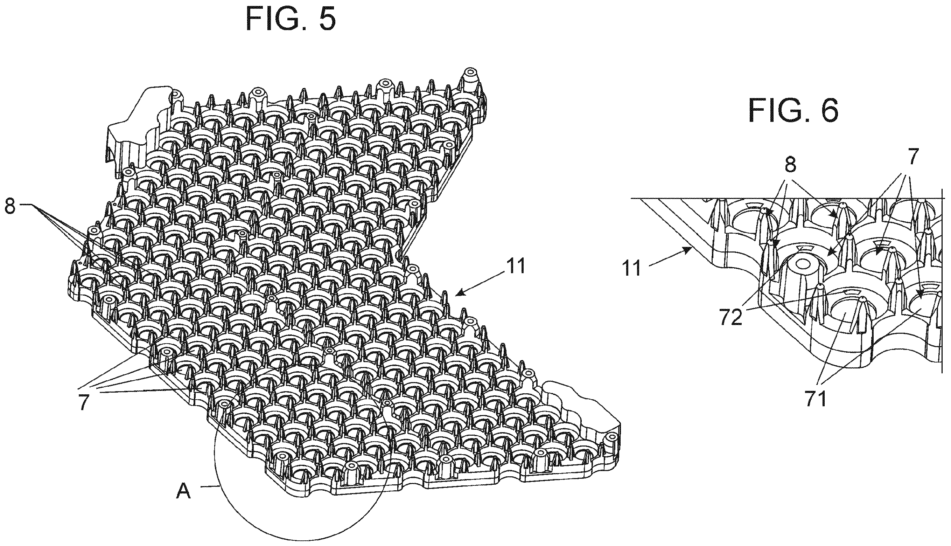

To complement the description being carried out and in order to assist to best understanding the characteristics of the invention, attached to this specification, as an integral part thereof, there is a drawing in which, for illustration and no limitation purpose, the following has been represented:
The figure number 1.- It shows a schematic top view in perspective of an example of embodiment of the container-shaped box that comprises the casing for electric battery object of the invention, its configuration can be seen, especially the slots provided on the internal surface of the base of the said box.
the figure number 2.- It shows a schematic view in perspective of an example of the centering part that is incorporated in each cell to facilitate centering in the slots of the box, which has been represented in an independent manner, its general configuration and main parts can be seen;
the figure number 3.- It shows an example of a cell of the battery with the centering part incorporated at its lower base;
the figure number 4.- It shows a sectional view, according to a vertical cross section, of an example of the battery to which the casing object of the invention is designed, the arrangement of the cells in the slots of the box can be seen as well as the upper securing part;
the figure number 5.- It shows a schematic view in perspective of an example of the upper securing part that comprises the casing, according to the invention, which has been represented in inverted position to facilitate watching its main parts; and
the figure number 6.- It shows an enlarged view of the detail A appearing in the figure 5 and that allows to appreciate with higher accuracy the configuration and parts of the upper securing part.

### PREFERRED EMBODIMENT OF THE INVENTION

Seen the said figures, and according to the numerals adopted, a non-limiting example of embodiment of the casing for electric battery of the invention which comprises what is described in detail thereafter.

Thus, as it can be seen in the said figures, the casing (1) of the invention applicable to an electric battery (2) to house inside a plurality of identical electrochemical cells (3), essentially comprises a metal container-shaped box (10), formed by a lower base (101) and a perimetric wall (102) , where the cells (3) are incorporated, which is distinguished in that the said lower base (101) presents internally a plurality of identical slots (4), preferably obtained by machining by means of milling in the material forming the said base, that are distributed on the full extent of its surface and that have a number, shape and size adapted to receive a lower portion of each of the cells (3), so that each of the cells (3) of the battery remains secured in one of the slots (4) and separated from each other with a regular gap between them.

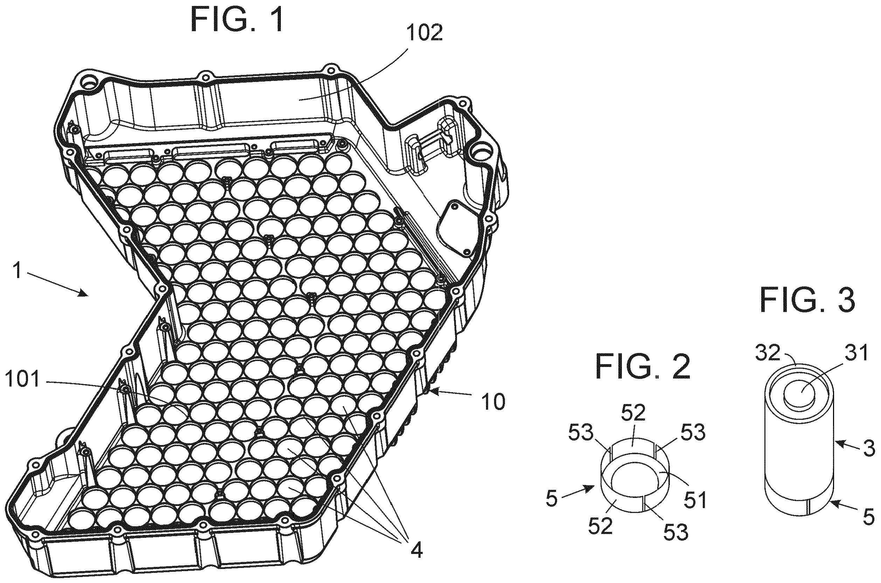

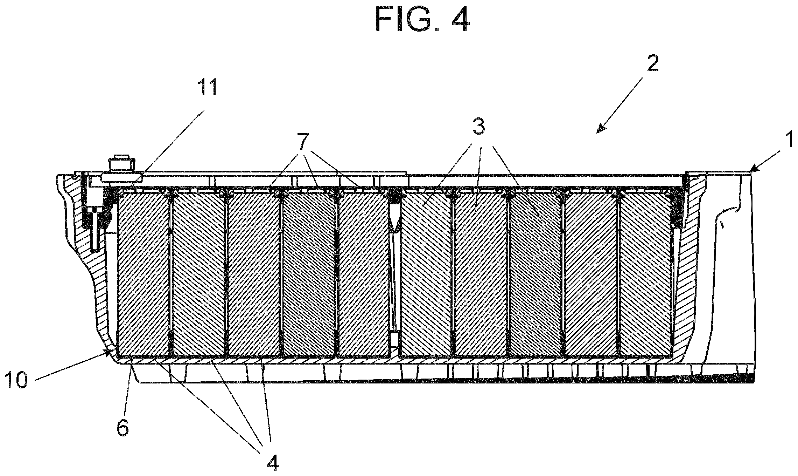

Preferably, the casing (1) is designed to a battery of cylindric cells (3), therefore the slots (4) of the internal surface of the base (101) of the box that forms the casing have a circular configuration and a diameter in line with the diameter of the cells (3), as it can be seen in the example of the figure 1. In an example of embodiment, the battery (2) includes up to 200 cells (3).

Preferably, each of the cells (3) of the battery (2) fits in each of the said slots (4) of the box (10) of the casing (1) by means of the inclusion of a centering part (4) which, preferably consists of a plastic material part, as it can be seen in the figures 2 and 3, preferably it is formed by a bowl-shaped body with a centrally "holed" (*orificada*) base (51), that leaves accessible the base of the cell (3), and a perimetric wall divided in different lengths (52) by open slots (53) up to the end so that it endows it a given flexibility, allowing to achieve an improved adjustment of each cell (3) in the related slot (4) of the box (10) of the casing (1).

Anyway, preferably, between the lower base of the cells (3) and the housing defined by the slots (4) of the internal surface of the base (101) of the box (10) of the casing (1) it is foreseen to incorporate a hot glue (6) to assure a best fixation of the cells (3), the said glue is an electric insulator and heat conductor, to favor the evacuation of the heat generated by the cells (3) towards the base (101) of the box (10).

On the other hand, in an optional embodiment of the invention, the casing (1) comprises, in addition, an upper fixing part (11) that acts as a lid of the box (10) fitting on its perimetric wall (102) and on the cells (3), serving for centering the cells (3) and for their insulation, leaving the contacts uncovered for the electric connection.

For this, the said securing part (11) presents a plurality of "holed" (*orificados)* housings (7) that, distributed on the full extent of the said part, have a number, shape and size adapted to receive an upper portion of each of the cells (3) so that they surround each cell (3) leaving apparent and insulated to each other their positive and negative contacts necessary for the electric connection.

Preferably, the said housings (7) of the upper fixing part (11) are circular as well as the cells (3) that, preferably, are cylindric.

And, preferably, each circular housing (7) of the upper fixing part (11) presents a central hole (71) coinciding with the lug (31) of the cells (3) upper base, that constitutes their positive pole or anode, and a lateral hole (72) that leaves apparent at least a portion of the perimetric edge (32) of each cell (3) and that constitutes the negative pole or cathode. In the detail of the figure 6, the said central (71) and lateral (72) holes of the housings (7) of the upper fixing part (11) can be clearly seen, while in the figure 3, the lug (31) and the perimetric edge (32) of each of the cells (3) can be seen.

Anyway, preferably, the upper securing part (11) of the casing (1) in addition presents centering cones (8) that emerge protruding around the housings (7) as guide fingers with the aim to assist to centering the set of all the cells (3) of the battery (2).

In a preferred embodiment, the said cones (8) have a rounded vortex and a tilt of their conical surface of around 15º with respect to their base, to favor the said centering function. In the figure 6, the said configuration of the said cones (8) can be seen.

Sufficiently disclosed the nature of this invention, as well as the manner of implementing it, it is not deemed necessary to extend anymore its explanation in order that any person skilled in the art understands its extends and the advantages arising from it.

## Claims

1. Casing for electric battery that, applicable to an electric battery (2) to house inside a plurality of identical electrochemical cells (3) and comprising a metal container-shaped box (10), formed by a lower base (101) and a perimetric wall (102) , where the cells (3) are incorporated, **characterized in that** the lower base (101) of the metal box (10) internally presents a plurality of identical slots (4), that are distributed on the full extent of its surface and that possess a number, shape and size adapted to receive a lower portion of each of the cells (3), so that each of the cells (3) of the battery remains secured in one of the slots (4) and separated to each other with a regular gap between them.

2. Casing for electric battery, according to the claim 1, **characterized in that** the slots (4) of the internal surface of the lower base (101) of the metal box (10) are obtained by machining by means of milling on the material forming the said base.

3. Casing for electric battery, according to the claim 1 or 2, **characterized in that** each of the cells (3) of the battery (2) fits in each of the said slots (4) of the box (10) of the casing (1) by means of the inclusion of a centering part (5).

4. Casing for electric battery, according to any of the claims 1 to 3, **characterized in that** between the lower base of the cells (3) and the housing defined by the slots (4) of the internal surface of the base (101) of the box (10) of the casing (1) it is foreseen to incorporate a hot glue (6) that is an electric insulator and heat conductor, to favor the evacuation of the heat generated by the cells (3) towards the base (1a) of the box (10).

5. Casing for electric battery, according to any of the preceding claims, **characterized in that** the cells (3) are cylindric and the slots (4) of the internal surface of the base (101) of box (10) have a circular configuration and with a diameter in line with the diameter of the cells (3).

6. Casing for electric battery, according to the claim 3 and 5, **characterized in that** each centering part (5) is formed by a bowl-shaped body with a base centrally provided with a centrally "holed" (*orificada)* base (51), that leaves the base of the said cell (3) accessible, and a perimetric wall divided in different lengths (52) by open slots (53) up to the end, that endows flexibility to it,

7. Casing for electric battery, according to the claim 6, **characterized in that** the centering parts (5) are of plastic material.

8. Casing for electric battery, according to the claim 1, **characterized in that** It comprises in addition an upper fixing part (11) that acts as a lid to the box (10) fitted on its perimetric wall (102) and on the cells (3) centering them and leaving the contacts apparent, for the electric connection.

9. Casing for electric battery, according to the claim 8 **characterized in that** the upper fixing part (11) comprises a plurality of holed" (*orificados)* housings (7) that, distributed on the full extent of the said part, have a number, shape and size adapted to receive an upper portion of each of the cells (3) so that they surround each cell (3) leaving apparent and insulated to each other their positive and negative contacts.

10. Casing for electric battery, according to any of the claims 5 and 9 **characterized in that**, the housings (7) of the upper fixing part (11) are circular as well as the cells (3).

11. Casing for electric battery, according to the claim 10 **characterized in that**, each circular housing (7) of the upper fixing part (11) presents a central hole (71) coinciding with the lug (31) of the cells upper base (3), that constitutes their positive pole or anode, and a lateral hole (72), that leaves apparent at least a portion of the perimetric edge (32) of each cell (3) and that constitutes the negative pole or cathode.

12. Casing for electric battery, according to any of the claims 9 to11 **characterized in that**, the upper securing part (11) presents centering cones (8) that emerge protruding around the housings (7) as guide fingers with the aim to assist to centering the set of all the cells (3) of the battery (2).

13. Casing for electric battery, according to the claim 12 **characterized in that**, the said cones (8) have a rounded vortex and a tilt of their conical surface of around 15º with respect to their base,
